**Europäisches Patentamt**

**European Patent Office**

**Office européen des brevets**

(19)

(11) Veröffentlichungsnummer : **0 491 231 B1**

## (12) EUROPÄISCHE PATENTSCHRIFT

(45) Veröffentlichungstag der Patentschrift :
**16.03.94 Patentblatt 94/11**

(51) Int. Cl.⁵ : **C09C 1/00**

(21) Anmeldenummer : **91120795.9**

(22) Anmeldetag : **04.12.91**

(54) **Zirkoniumsilikat-Farbkörper.**

(30) Priorität : **15.12.90 DE 4040162**

(43) Veröffentlichungstag der Anmeldung :
**24.06.92 Patentblatt 92/26**

(45) Bekanntmachung des Hinweises auf die
Patenterteilung :
**16.03.94 Patentblatt 94/11**

(84) Benannte Vertragsstaaten :
**BE DE ES FR GB IT NL**

(56) Entgegenhaltungen :
**DE-A- 3 345 413**
**GB-A- 2 011 366**
**PATENT ABSTRACTS OF JAPAN vol. 7, no.**
**277 (C-199)9. Dezember 1983 & JP-A-58157868**
**(Kogyo Gijutsuin et al.) 20. September 1983**

(73) Patentinhaber : **BASF Lacke + Farben AG**
**Glasuritstrasse 1**
**D-48165 Münster-Hiltrup (DE)**

(72) Erfinder : **Felger, Joachim**
**Im Wiesental 22**
**W-7141 Steinheim 3 (DE)**
Erfinder : **Camara, Boubacar, Dr.**
**Trailhoeferstrasse 59**
**W-7159 Auenwald (DE)**
Erfinder : **Maurer, Erwin**
**Kindergartenstrasse 8**
**W-7142 Marbach 3 (DE)**
Erfinder : **Etzrodt, Günter, Dr.**
**Rebmannstrasse 6**
**W-7000 Stuttgart 1 (DE)**

(74) Vertreter : **Karau, Wolfgang, Dr. et al**
**BASF Aktiengesellschaft, Patentabteilung**
**ZDX - C 6**
**D-67056 Ludwigshafen (DE)**

## Beschreibung

Vorliegende Erfindung betrifft Farbkörper vom Zirkoniumsilikat-Typ, bei denen in das Gitter des Zirkoniumsilikates Übergangselemente eingebaut sind.

Farbkörper des Zirkoniumsilikattypes werden als keramische Farbkörper in großem Umfang zum Einfärben von Glasuren eingesetzt. Blaue Farbkörper werden durch den Einbau von Vanadinionen, gelbe durch den Einbau von Praseodymionen, grüne durch den Einbau von Chromionen und rosa durch den Einbau von Eisenionen erhalten. Die Herstellung der Farbkörper erfolgt durch Glühen von Zirkoniumdioxid-Quarz-Mischungen in Gegenwart von Verbindungen des Dotierungsmetalles. Die genannten Farbkörper sind chemisch und thermisch sehr stabil.

Für die Gelb-Einfärbung von Kunststoffen, z.B. insbesondere von Hochdruckpolyethylen und Polypropylen wird bisher hauptsächlich Cadmiumsulfid eingesetzt, das jedoch in neuerer Zeit aus Umweltgründen nicht mehr verwendet werden darf. Da mit Praseodym dotierte Zirkonium-Silikat-Farbkörper (Praseodymgelb) bezüglich ihres Farbtones dem Farbton des Cadmiumsulfids ähnlich sind, lag es nahe, bei der Einfärbung von Kunststoffen anstelle des Cadmiumsulfids das umweltverträgliche Praseodymgelb in Kunststoffe einzusetzen. Es hat sich jedoch gezeigt, daß bei der Einarbeitung von Praseodymgelb bzw. bei der Verarbeitung von mit Praseodymgelb eingefärbten Kunststoffen, z.B. in Spritzgußmaschinen eine unerwünschte Veränderung der Farbe in Richtung schmutzig (unbunter) eintritt.

Der vorliegenden Erfindung lag die Aufgabe zugrunde, Zirkoniumsilikat-Farbkörper, die mit Übergangsmetallen, insbesondere mit Praseodym dotiert sind, bereitzustellen, die die oben genannten Nachteile nicht aufweisen.

Es wurde gefunden, daß diese Aufgabe bei Zirkoniumsilikat-Farbkörpern, die mit Übergangsmetallen, insbesondere mit Praseodym dotiert sind, dadurch gelöst werden kann, daß sie eine Korngrößenverteilung von $D_{50}$ zwischen 0,1 bis 4 µm sowie $D_{90} \leqq 10$ µm aufweisen und ihre Oberfläche mit einer Schicht aus Oxiden, Oxidhydraten und/oder Hydroxiden der Elemente Magnesium, Aluminium, Titan, Silicium und/oder Zinn belegt sind.

Die Korngröße wird nach dem Laserbeugungsverfahren (Cilas) mit einer wäßrigen 2 Minuten lang mit Ultraschall behandelten Pigmentsuspension bestimmt.

Die erfindungsgemäßen Zirkoniumsilikat-Farbkörper weisen eine Schicht aus den Oxiden, Oxidhydraten und/oder Hydroxiden der genannten Elemente in einer Menge von 0,1 bis 50 Gew.-%, vorzugsweise von 0,5 bis 10 Gew.-%, auf. Besonders bevorzugte Schichten sind Schichten aus den genannten Oxidverbindungen des Aluminiums, Titans und/oder Zinns. Die bevorzugte Korngröße $D_{50}$) der Zirkoniumsilikat-Farbkörper beträgt 2-4 µm.

Die Herstellung der Schichten erfolgt vorteilhaft durch Auffällung der genannten Oxidverbindungen in wäßrigen Suspensionen der Zirkoniumsilikat-Farbkörper mit den genannten Korngrößen. Farbkörper mit größeren Korngrößen werden vorher durch Vermahlen auf die gewünschte Feinheit zerkleinert. Man kann bei der Fällung so vorgehen, daß man die Farbkörper in wäßriger Suspension vorlegt und in die Suspension gleichzeitig eine wäßrige Lösung eines Salzes des Metalles der aufzubringenden Oxidverbindung und eine wäßrige Lösung einer alkalisch reagierenden Verbindung z.B. Alkalihydroxide, Alkalicarbonate und/oder Ammoniak einführt und in der Suspension einen pH-Wert aufrecht erhält bei dem das Hydroxid des entsprechenden Metalles ausfällt. Auch Verbindungen wie z.B. $TiCl_4$, $SnCl_4$, $SiCl_4$ und dgl. sind geeignet. Man kann aber auch so verfahren, daß man den Farbkörper in der wäßrigen Lösung der Verbindung, deren Metall als Hydroxid niedergeschlagen werden soll, oder in der Lösung der alkalisch reagierenden Verbindung suspendiert und in diese Suspension entweder die Lösung der alkalisch reagierenden Verbindung oder die Lösung der Metallverbindung einträgt und das Hydroxid auf die Oberfläche des Farbkörpers auffällt. Die Auffällung kann bei Temperaturen von 10°C bis zum Siedepunkt, vorzugsweise aber bei Temperaturen oberhalb von 85°C durchgeführt werden. Nach beendeter Fällung wird abfiltriert, der beschichtete Farbkörper gewaschen, getrocknet und gegebenenfalls bei Temperaturen getempert, bei denen das Hydroxid in das Oxidhydrat bzw. Oxid übergeführt wird.

Es ist aber auch möglich die Oxidverbindungen dadurch aufzubringen, daß man eine wäßrige Suspension der Farbkörper mit den Oxiden, Oxidhydraten oder Hydroxien der genannten Elemente vermahlt, anschließend die so behandelten Farbkörper von der flüssigen Phase abtrennt, auswäscht und trocknet.

Die erfindungsgemäßen Zirkoniumsilikat-Farbkörper eignen sich insbesondere zur Einfärbung von Kunststoffen und erleiden bei deren Verarbeitung, beispielsweise bei der Verformung in Spritzgußmaschinen keine negative Veränderung des Farbtones. Sie können aber auch als Farbpigmente bei der Herstellung von Lacken eingesetzt werden.

Beispiel 1

3000 kg Praseodymgelb mit einer Korngrößenverteilung von $D_{50}$ = 2,8 µm und $D_{90}$ = 5,0 µm und 600 kg Aluminiumsulfat werden mit 2,5 m³ vollentsalztem Wasser 2 Stunden lang in einer Kugelmühle gemahlen. Die erhaltene Suspension wird in einem Rührbehälter mit weiterem Wasser auf ein Gesamtvolumen auf 13 m³ aufgefüllt und unter Rühren auf eine Temperatur von 85°C erwärmt. Anschließend werden 6,5 m³ 7 gew.-%iger Natriumcarbonatlösung unter weiterem Rühren innerhalb von 5 Stunden zugegeben, wobei der pH-Wert von 2,8 auf 8,0 ansteigt und auf dem Praseodymfarbkörper eine Schicht von Aluminiumhydroxid aufgefällt wird. Nach beendeter Umsetzung wird abfiltriert, ausgewaschen und der Filterkuchen bei 90°C getrocknet.

Man erhält ein Pigment, das mit 2,5 Gew.-% Aluminiumhydroxid beschichtet ist. Die Korngröße des Pigmentes beträgt $D_{50}$ = 3,7 µm und $D_{90}$ = 8,0 µm.

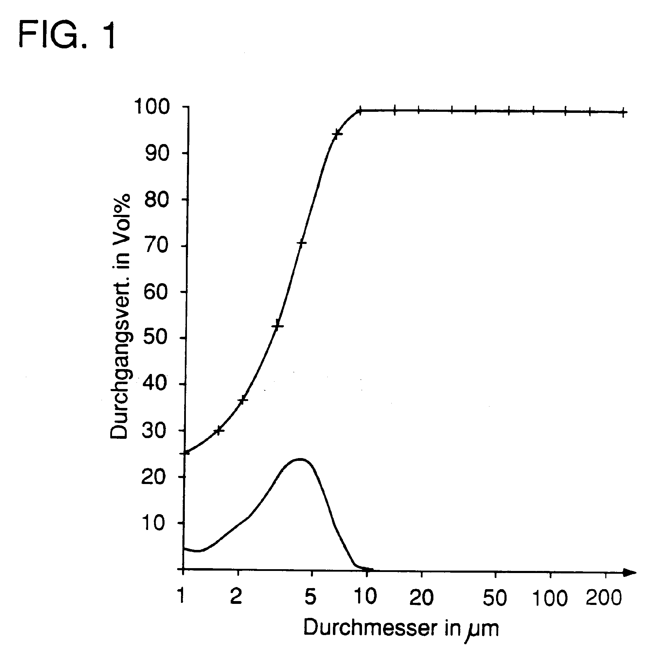

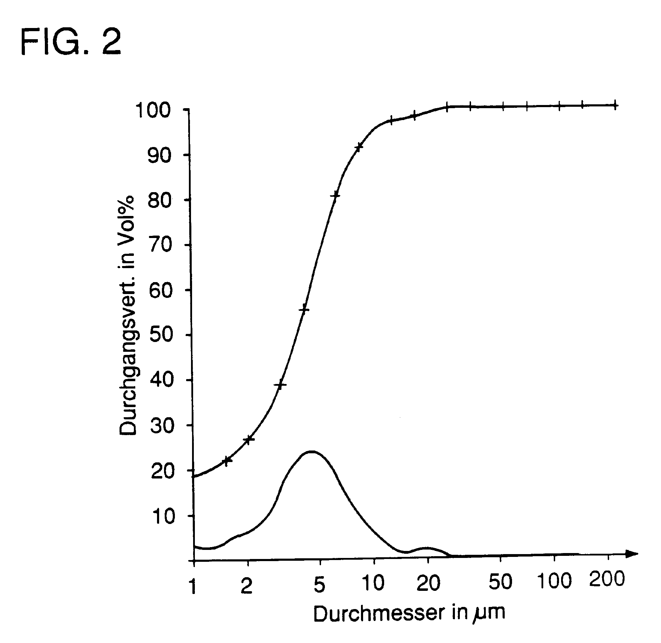

In der Figur 1 ist die Korngrößenverteilungskurve des eingesetzten Pigmentes (Nullprobe) und in Figur 2 die Korngrößenverteilungskurve des beschichteten Pigmentes wiedergegeben.

Beispiel 2

3000 kg Praseodymgelb - Kornverteilung wie in Beispiel 1 - werden mit 2,5 m³ vollentsalztem Wasser 2 Stunden lang in einer Kugelmühle vermahlen.

Die erhaltene Suspension wird in einem Rührbehälter durch Zugabe von weiterem vollentsalztem Wasser auf ein Gesamtvolumen auf 18 m³ aufgefüllt. Unter Rühren werden 450 l einer Titanoxichloridlösung (200 g/l $TiO_2$) und anschließend innerhalb von 5 Stunden 5,4 m³ 10,0 gew.-%iger Natronlauge zugegeben, wobei der pH-Wert der Suspension von 1,0 auf 8,0 angehoben wird und auf dem Praseodymgelb-Farbkörper eine Schicht von Titanhydroxid abgeschieden wird. Anschließend wird abfiltriert, gewaschen und bei 90°C getrocknet.

Man erhält ein Pigment, das mit 2,9 Gew.-% Titandioxid beschichtet ist. Die Korngröße des beschichteten Pigmentes beträgt $D_{50}$ = 3,7 µm und $D_{90}$ = 8,0 µm.

Zur Prüfung des Abrasionsverhaltens der gemäß Beispiele 1 und 2 erhaltenen Farbkörper wird Hochdruckpolyethylen mit jeweils 2 Gew.-% pigmentiert und in einer Spritzgußmaschine zu Formkörpern extrudiert. Die Farbwerte L*= Helligkeit, $C_{ab}^*$ = Buntheit und $H_{ab}^*$ = Buntton der dabei erhaltenen Spritzlinge werden vermessen (nach DIN 6174 (Cilab) mit Normlichtart D65) und verglichen mit den Farbwerten von Spritzlingen, die mit nicht behandelten Farbkörpern erhalten worden sind. Die Ergebnisse dieser Messungen sind in den folgenden Tabellen dargestellt.

Tabelle 1

| Nullprobe | | L* | $C_{ab}^*$ | $H_{ab}^*$ |
|---|---|---|---|---|
| Praseodymgelb ohne Zusatz | Spritzling 2 – 77,55 | | 74,35 | 89,72 |
| 2,0 gew.-%ig pigmentiert | "   4 – 77,43 | | 73,72 | 89,39 |
| (Nullprobe) | "   6 – 76,93 | | 73,11 | 89,89 |
| | "   8 – 76,87 | | 73,07 | 89,84 |
| | "  10 – 76,75 | | 72,22 | 90,01 |
| | "  12 – 76,88 | | 71,37 | 90,19 |

Tabelle 2

| Probe nach Beispiel 1 | | | $L^*$ | $C^*_{ab}$ | $H^*_{ab}$ |
|---|---|---|---|---|---|
| 2 gew.-%ig pigmentiert | Spritzling | 3 - | 78,31 | 73,65 | 90,58 |
| | " | 5 - | 78,46 | 74,15 | 90,77 |
| | " | 7 - | 78,69 | 74,86 | 90,67 |
| | " | 9 - | 78,45 | 73,75 | 90,82 |
| | " | 11 - | 78,41 | 73,51 | 90,65 |

Tabelle 3

| Probe nach Beispiel 2 | | | $L^*$ | $C^*_{ab}$ | $H^*_{ab}$ |
|---|---|---|---|---|---|
| 2 gew.-% pigmentiert | Spritzling | 2 - | 74,71 | 65,55 | 90,33 |
| | " | 4 - | 75,58 | 67,26 | 90,09 |
| | " | 6 - | 75,46 | 66,95 | 90,27 |
| | " | 8 - | 75,17 | 66,68 | 90,22 |
| | " | 12 - | 75,72 | 67,43 | 89,90 |

Die Tabellen 1 bis 3 Zeigen, daß der Meßwert von $C^*_{ab}$ der Nullprobe vom 2. bis 12. Spritzling abnimmt, d.h. die Farbe wird unbunter (schmutziger), während die Spritzlinge mit den Pigmenten gemäß den Beispielen 1 und 2 keine bzw. eine Veränderung von $C^*_{ab}$ nach höheren Werten (Farbe bunter = reiner) aufweisen.

**Patentansprüche**

**Patentansprüche für folgende Vertragsstaaten : BE, DE, FR, GB, IT, NL**

1. Zirkoniumsilikat-Farbkörper, die mit Übergangsmetallen, insbesondere mit Praseodym dotiert sind, dadurch gekennzeichnet, daß sie eine Korngrößenverteilung von $D_{50}$ zwischen 0,1 und 4 µm sowie $D_{90} \leqq$ 10 µm aufweisen und ihre Oberfläche mit einer Schicht aus Oxiden, Oxidhydraten und/oder Hydroxiden der Elemente Magnesium, Aluminium, Titan, Silicium und/oder Zinn belegt sind.

2. Zirkoniumsilikat-Farbkörper nach Anspruch 1, dadurch gekennzeichnet, daß sie mit den Oxiden, Oxidhydraten und/oder Hydroxiden in einer Menge von 0,1 bis 50 Gew.-% belegt sind.

3. Zirkoniumsilikat-Farbkörper nach Anspruch 1 und 2, dadurch gekennzeichnet, daß sie mit den Oxiden, Oxidhydraten und/oder Hydroxiden in einer Menge von 0,5 bis 10 Gew.-% belegt sind.

4. Verfahren zur Herstellung der Zirkoniumsilikat-Farbkörper nach Ansprüchen 1 bis 3, dadurch gekennzeichnet, daß die Schicht durch Auffällung der Oxide, Oxidhydrate und/oder Hydroxide der Elemente des Magnesiums, Aluminums, Titans, Siliciums und/oder Zinns in einer wäßrigen Suspension der Zirkoniumsilikat-Farbkörper und gegebenenfalls anschließendes Tempern erzeugt wird.

5. Verfahren nach Anspruch 4, dadurch gekennzeichnet, daß die Auffällung bei Temperaturen oberhalb von 85°C durchgeführt wird.

6. Verwendung der Zirkonsilikat-Farbkörper nach Ansprüchen 1 bis 3 für die Einfärbung von Kunststoffen.

**Patentansprüche für folgenden Vertragsstaat : Es**

1. Verfahren zur Herstellung von mit Übergangsmetallen, insbesondere mit Praseodym dotierten Zirkoniumsilikat-Farbkörpern, die durch eine Korngrößenverteilung von $D_{50}$ zwischen 0,1 und 4 μm sowie $D_{90} \leqq 10$ μm gekennzeichnet sind und auf ihrer Oberfläche eine Schicht aus Oxiden, Oxidhydraten und/oder Hydroxiden der Elemente Magnesium, Aluminium, Titan, Silicium und/oder Zinn tragen, dadurch gekennzeichnet, daß die Schicht durch Auffällung der Oxide, Oxidhydrate und/oder Hydroxide der Elemente des Magnesiums, Aluminums, Titans, Siliciums und/oder Zinns in einer wäßrigen Suspension der Zirkoniumsilikat-Farbkörper und gegebenenfalls anschließendes Tempern erzeugt wird.

2. Verfahren nach Anspruch 1, dadurch gekennzeichnet, daß die Auffällung bei Temperaturen oberhalb von 85°C durchgeführt wird.

3. Verfahren nach Anspruch 1, dadurch gekennzeichnet, daß man Oxide, Oxidhydrate und/oder Hydroxide in einer Menge von 0,1 bis 50 Gew.-% aufbringt.

4. Verfahren nach Anspruch 1, dadurch gekennzeichnet, daß man Oxide, Oxidhydrate und/oder Hydroxide in einer Menge von 0,5 bis 10 Gew.-% aufbringt.

5. Verwendung der gemäß den Ansprüchen 1 bis 4 hergestellten Zirkonsilikat-Farbkörper für die Einfärbung von Kunststoffen.


**Claims**

**Claims for the following Contracting States : BE, DE, FR, GB, IT, NL**

1. Zirconium silicate color stains doped with transition metals, in particular with praseodymium, characterized in that they have a particle size distribution of $D_{50}$ between 0.1 and 4 μm and $D_{90} \leqq 10$μm and their surface has been coated with a layer of oxides, hydrated oxides and/or hydroxides of the elements magnesium, aluminum, titanium, silicon and/or tin.

2. Zirconium silicate color stains as claimed in claim 1, characterized in that they have been coated with the oxides, hydrated oxides and/or hydroxides in an amount of from 0.1 to 50% by weight.

3. Zirconium silicate color stains as claimed in claim 1 or 2, characterized in that they have been coated with the oxides, hydrated oxides and/or hydroxides in an amount of from 0.5 to 10% by weight.

4. A process for preparing the zirconium silicate color stains of claims 1 to 3, characterized in that the layer is produced by precipitating the oxides, hydrated oxides and/or hydroxides of the elements magnesium, aluminum, titanium, silicon and/or tin in an aqueous suspension of the zirconium silicate color stain and optionally subsequent heating.

5. A process as claimed in claim 4, characterized in that the precipitation is carried out at above 85°C.

6. The use of the zirconium silicate color stains of claims 1 to 3 for coloring plastics.

**Claims for the following Contracting State : ES**

1. A process for preparing zirconium silicate color stains doped with transition metals, in particular with praseodymium, which are characterized by a particle size distribution of $D_{50}$ between 0.1 and 4 μm and $D_{90} \leqq 10$μm and bear on their surface a layer of oxides, hydrated oxides and/or hydroxides of the elements magnesium, aluminum, titanium, silicon and/or tin, characterized in that the layer is produced by precipitating the oxides, hydrated oxides and/or hydroxides of the elements of magnesium, aluminum, titanium, silicon and/or tin in an aqueous suspension of the zirconium silicate color stain and optionally subsequent heating.

2. A process as claimed in claim 1, characterized in that the precipitation is carried out at above 85°C.

3. A process as claimed in claim 1, characterized in that oxides, hydrated oxides and/or hydroxides are applied in an amount of from 0.1 to 50% by weight.

4. A process as claimed in claim 1, characterized in that oxides, hydrated oxides and/or hydroxides are applied in an amount of from 0.5 to 10% by weight.

5. The use of the zirconium silicate color stains prepared as set forth in claims 1 to 4 for coloring plastics.

**Revendications**

**Revendications pour les Etats contractants suivants : BE, DE, FR, GB, IT, NL**

1. Corps colorants à base de silicate de zirconium qui sont dopés avec des métaux de transition, plus particulièrement le praséodyme, caractérisés en ce qu'ils présentent une répartition des calibres des grains ou granulométrie de $D_{50}$ comprise entre 0,1 et 4 mym, comme aussi $D_{90} \leqq 10$ mym et en ce que leurs surfaces sont revêtues d'une couche d'oxydes, d'oxydes-hydrates et/ou d'hydroxydes des éléments magnésium, aluminium, titane, silicium et/ou étain.

2. Corps colorants à base de silicate de zirconium suivant la revendication 1, caractérisés en ce qu'ils sont revêtus des oxydes, oxydes-hydrates et/ou hydroxydes en une proportion de 0,1 à 50% en poids.

3. Corps colorants à base de silicate de zirconium suivant les revendications 1 et 2, caractérisés en ce qu'ils sont revêtus des oxydes, oxydes-hydrates et/ou hydroxydes en une proportion de 0,5 à 10% en poids.

4. Procédé de préparation de corps colorants à base de silicate de zirconium suivant les revendications 1 à 3, caractérisé en ce que l'on obtient la couche par la précipitation des oxydes, oxydes-hydrates et/ou hydroxydes des éléments constitués par le magnésium, l'aluminium, le titane, le silicium et/ou l'étain, dans une suspension aqueuse des corps colorants à base de silicate de zirconium et traitement thermique subséquent éventuel.

5. Procédé suivant la revendication 4, caractérisé en ce que l'on entreprend la précipitation à des températures supérieures à 85°C.

6. Utilisation des corps colorants à base de silicate de zirconium suivant les revendications 1 à 3 pour la coloration ou teinture dans la masse de matières plastiques.

**Revendications pour l'Etat contractant suivant : ES**

1. Procédé de préparation de corps colorants à base de silicate de zirconium dopés avec des métaux de transition, plus particulièrement avec du praséodyme, qui se caractérisent par une répartition des calibres des grains ou granulométrie de $D_{50}$ comprise entre 0,1 et 4 mym, comme aussi par $D_{90} \leqq 10$ mym et qui portent en surface une couche d'oxydes, d'oxydes-hydrates et/ou d'hydroxydes des éléments magnésium, aluminium, titane, silicium et/ou étain, caractérisé en ce que l'on obtient la couche par la précipitation des oxydes, oxydes-hydrates et/ou hydroxydes des éléments constitués par le magnésium, l'aluminium, le titane, le silicium et/ou l'étain, dans une suspension aqueuse des corps colorants à base de silicate de zirconium et traitement thermique subséquent éventuel.

2. Procédé suivant la revendication 1, caractérisé en ce que l'on entreprend la précipitation à des températures supérieures à 85°C.

3. Procédé suivant la revendication 1, caractérisé en ce que l'on applique les oxydes, oxydes-hydrates et/ou hydroxydes en une proportion de 0,1 à 50% en poids.

4. Procédé suivant la revendication 1, caractérisé en ce que l'on applique les oxydes, oxydes-hydrates et/ou hydroxydes en une proportion de 0,5 à 10% en poids.

5. Utilisation des corps colorants à base de silicate de zirconium préparés suivant l'une quelconque des revendications 1 à 4, pour la coloration ou teinture dans la masse de matières plastiques.

# FIG. 1

FIG. 2